(19) Europäisches Patentamt
European Patent Office
Office européen des brevets

(11) **EP 4 700 603 A1**

(12) **EUROPEAN PATENT APPLICATION**

(43) Date of publication:
**25.02.2026 Bulletin 2026/09**

(21) Application number: **25194636.4**

(22) Date of filing: **07.08.2025**

(51) International Patent Classification (IPC):
**G06F 16/3329** (2025.01)  **G06F 16/334** (2025.01)
**G06F 40/30** (2020.01)  **G06N 5/022** (2023.01)
**G06N 20/00** (2019.01)

(52) Cooperative Patent Classification (CPC):
**G06F 16/33295; G06F 40/30; G06F 40/35;
G06N 3/006; G06N 3/044; G06N 3/045; G06N 3/08;
G06N 3/084; G06N 3/088; G06N 5/02; G06N 5/022;
G06N 5/04; G06N 5/041; G06N 7/01; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.08.2024 US 202418810039**

(71) Applicant: **Equinix, Inc.**
**Redwood City, CA 94065 (US)**

(72) Inventors:
• **SHASTRI, Rajeev**
**Redwood City, California 94065 (US)**
• **RATNAKAR, Shivam**
**Redwood City, California 94065 (US)**
• **NAYAK, Soumya Ranjan**
**Redwood City, California 94065 (US)**

(74) Representative: **HGF**
**HGF Limited**
**4th Floor, 1 City Square**
**Leeds LS1 2ES (GB)**

(54) **USER PROFILING USING CHAIN-OF-THOUGHT KNOWLEDGE GRAPHS FOR QUERYING A MACHINE LEARNING SYSTEM**

(57)    Techniques are disclosed for a machine learning model, such as a large learning model (LLM), that incorporates a model of a chain of thought of a particular user when responding to a query from the user. In one example, a system generates a knowledge graph of a chain of thought of the user. The knowledge graph comprises nodes representing topics present within past queries by the user and edges representing a co-occurrence between the topics. The system determines, based on a topic present within a query from the user and the knowledge graph, a goal query comprising a goal topic. The system provides, to a machine learning model, the user to generate, by the machine learning model, a response. The machine learning model is constrained to include the goal topic of the goal query within the response. The system outputs, for display, the response to the query.

**FIG. 1**

EP 4 700 603 A1

**Description**

**TECHNICAL FIELD**

This disclosure generally relates to machine learning.

**BACKGROUND**

Artificial Intelligence (AI) has been a rapidly evolving field in recent years, with significant advancements in Natural Language Processing (NLP) and Information Retrieval Systems (IRS). NLP is a subfield of AI that focuses on enabling machines to understand, interpret, and generate human language. IRS, on the other hand, is a field that deals with the organization and retrieval of information from a large number of documents. In the context of AI-based conversational assistants, these technologies are often used to enhance the understanding and response capabilities of the conversational assistants, allowing it to better interact with users.

Currently, AI-based conversational assistants primarily use machine learning models, such as Large Language Models (LLMs), multimodal language models, or variational autoencoders with multimodal autoencoders, to understand and respond to user inputs. These models are trained on vast amounts of data and can generate human-like responses to a wide range of questions. Additionally, Knowledge Graphs (KGs) are often used to enhance the understanding of the bot by providing a structured representation of knowledge. This allows the bot to better understand the context of a user's question and provide more accurate responses.

Despite the advancements in AI-based conversational assistants, there are still several challenges that need to be addressed. One of the main issues is the ability of the bot to understand and remember the context of a conversation. This is particularly challenging in scenarios where the conversation spans multiple sessions or covers a wide range of topics. Another issue is the ability of the bot to accurately predict the next question or topic that the user is likely to ask. This is crucial for providing a seamless and engaging user experience, but it remains a significant challenge in current technology. Furthermore, while KGs can enhance the understanding of the bot, they are often difficult to maintain and update, especially in real-time scenarios.

**SUMMARY**

In general, the disclosure describes techniques for enhancing the use of a conversational assistant that employs machine learning for formulating a response to a query from a user, by incorporating a model of a chain of thought corresponding to the specific user. In one example of the techniques of the disclosure, a system, such as a conversational assistant system, processes, for each user of a plurality of different users, records of past queries by each user and corresponding past responses by the machine learning model to generate a knowledge graph corresponding to each user of the plurality of different users. In some examples, the knowledge graph comprises a chain-of-thought knowledge graph (CoT-KG) that models a chain of thought of each specific user of the plurality of different users. The knowledge graph comprises nodes and edges, each of the nodes representing a topic present within the past queries by the user, and each of the edges representing a co-occurrence between the topics present within the past queries by the user.

The system receives a query from a user and determines, from the query, one or more topics present within the query. The system determines, based at least in part on each topic present within the query and the knowledge graph corresponding to the user, a goal query. The goal query comprises a goal topic that is predicted to be an end goal of the query from the user, to which the user is predicted to attempt to reach over the course of several query-and-response interactions with the system.

The system provides, to a machine learning model, the query by the user to generate, by the machine learning model, a response to the query by the user. In some examples, the machine learning model is a LLM. The system constrains the machine learning model to include the goal topic of the goal query within the response. The system outputs, for display, the response to the query by the user.

The techniques of the disclosure may provide specific improvements to the computer-related field of machine learning and, more specifically, of conversational AI that have practical applications. For example, the techniques of the disclosure may improve the ability of a conversational assistant to understand and remember the context of a conversation, even if the conversation spans multiple sessions or covers a wide range of topics. As another example, the techniques of the disclosure may enhance a conversational assistant's ability to accurately predict a next question or topic that a user is likely to ask, thereby providing a more seamless and engaging user experience. As another example, the techniques of the disclosure may simplify the maintenance and updating of KGs in real-time scenarios, which is currently a significant challenge in the field of AI-based conversational assistants.

In one example, this disclosure describes a system comprising: processing circuitry in communication with storage media, the processing circuitry configured to: process records of past queries by a user to generate a knowledge graph corresponding to the user, the knowledge graph comprising nodes and edges, each of the nodes representing a topic of topics present within the past queries by the user, and each of the edges representing a co-occurrence between the topics present within the past queries by the user; determine, from a query by the user, a topic present within the query; determine, based at least in part on the topic present within the query and the knowledge graph corresponding to the user, a goal query, the goal query comprising a goal topic; provide, to a machine learning model, the query by the user to generate, by the machine learning model, a response to the query by the user, wherein the goal topic constrains the machine learning model to include the goal topic of the goal query within the response; and output the response to the query by the user.

In another example, this disclosure describes a method comprising: processing, by processing circuitry, records of past queries by a user to generate a knowledge graph corresponding to the user, the knowledge graph comprising nodes and edges, each of the nodes representing a topic of topics present within the past queries by the user, and each of the edges representing a co-occurrence between the topics present within the past queries by the user; determining, by the processing circuitry, from a query by the user, a topic present within the query; determining, by the processing circuitry and based at least in part on the topic present within the query and the knowledge graph corresponding to the user, a goal query, the goal query comprising a goal topic; providing, , by the processing circuitry and to a machine learning model, the query by the user to generate, by the machine learning model, a response to the query by the user, wherein the goal topic constrains the machine learning model to include the goal topic of the goal query within the response; and outputting, by the processing circuitry, the response to the query by the user.

In another example, this disclosure describes non-transitory, computer-readable media comprising instructions that, when executed, are configured to cause processing circuitry to: process records of past queries by a user to generate a knowledge graph corresponding to the user, the knowledge graph comprising nodes and edges, each of the nodes representing a topic of topics present within the past queries by the user, and each of the edges representing a co-occurrence between the topics present within the past queries by the user; determine, from a query by the user, a topic present within the query; determine, based at least in part on the topic present within the query and the knowledge graph corresponding to the user, a goal query, the goal query comprising a goal topic; providing, to a machine learning model, the query by the user to generate, by the machine learning model, a response to the query by the user, wherein the goal topic constrains the machine learning model to include the goal topic of the goal query within the response; and output the response to the query by the user.

The details of one or more examples of the techniques of this disclosure are set forth in the accompanying drawings and the description below. Other features, objects, and advantages of the techniques will be apparent from the description and drawings, and from the claims.

## BRIEF DESCRIPTION OF DRAWINGS

FIG. 1 is a block diagram illustrating an example system for executing a conversational assistant in accordance with the techniques of the disclosure.
FIG. 2 is a block diagram illustrating another example system for executing a conversational assistant in accordance with the techniques of the disclosure.
FIG. 3 is a block diagram illustrating an example conversation chain in accordance with the techniques of the disclosure.
FIG. 4 is a block diagram illustrating an example CoT-KG in accordance with the techniques of the disclosure.
FIG. 5 is a block diagram illustrating an example computing device for executing a conversational assistant in accordance with the techniques of the disclosure.
FIG. 6 is a flow chart illustrating an example operation in accordance with the techniques of the disclosure.

Like reference characters refer to like elements throughout the figures and description.

## DETAILED DESCRIPTION

Recent advances in the LLM domain have given a significant boost to the quality and adoption of conversational assistants by enterprises. Because of their language understanding and reasoning capabilities, LLMs serve as a superior alternative to rule-based engine for building conversational assistants. Generally, enterprise conversational assistants are designed to give responses that cater to a business-defined user group instead of responses that are specific to a user.

A KG is a knowledge base that structures data in the form of a directed graph comprising nodes and edges between the nodes. The nodes of a KG may be used to represent topics, while the edges may be used to represent relationships between the topics represented by the corresponding nodes. A conventional machine learning system may use a KG to model a chain of thought of the machine learning system itself. By constraining the machine learning system to produce responses that follow a structured chain of thought process, the use of a conventional KG may increase the likelihood of the machine learning system producing coherent responses and decrease the occurrence of hallucinations (e.g., non sequitur topics) produced by the machine learning system.

A conventional machine learning system, and in particular, an LLM, is trained on large volumes of data produced by many different users. Therefore, such a conventional machine learning system is generalized to be applicable to a wide variety of users. Such conventional machine learning systems, such as LLM and multimodal systems (e.g., audio, video, and text), are therefore unable to capture a personal preference of a particular user. Further, such conventional machine learning systems may be unable to provide content that is specific to an individual user. With the advancement in LLMs, enterprises are working towards building conversational assistants that can give responses based on an individual user profile. Integrating a user profile and preferences specific to a user into a response of an LLM may improve the quality of the user experience and may help an enterprise resolve user queries faster.

In accordance with the techniques of the disclosure, a system implementing a conversational assistant as described herein employs a novel type of KG, referred to herein as a contextual topic CoT-KG, to model a user's thought process using a knowledge graph. Each node in the user profile graph of CoT-KG is an input-output pair referred to herein as a topic. This allows the system to represent a topic in any modality and seamlessly integrate with multimodal language models, variational autoencoders with multimodal autoencoders, and/or LLMs.

As described herein, a CoT-KG is created specific to each user. The CoT-KG is a mechanism to profile the corresponding user by modeling a user's chain of thought process over historical interactions of multiple modalities (e.g., text, image, audio and video) with the conversational assistant. The user profiles are then used to learn a user's chain of thought for customizing an LLM's response. For example, by leveraging the CoT-KG, the conversational assistant can predict an intent behind a user's query as well as predict future follow-up queries that might be asked by the user. This prediction is then used by an LLM to generate responses that incorporate a predicted overarching goal of the user. Thus, the techniques described herein may enable a conversational assistant that achieves a reduced number of queries and faster query resolution as compared to conventional conversational assistants that employ machine learning.

In addition, a conversational assistant system as described herein may exhibit improved understanding and memory. By modeling a user's thought process using a knowledge graph, the techniques of the disclosure may significantly improve the conversational assistant's ability to understand and remember the context of a conversation. Even if a conversation spans multiple sessions or covers a wide range of topics, the system may be able to accurately predict a next question or topic that a user is likely to ask. Thus, a conversational assistant as described herein may provide a more seamless and engaging user experience as compared to conventional conversational assistants that employ machine learning.

A system as described herein may furthermore enable integration with multiple modalities and/or multiple types of media, such as audio, video, text, or gestures received from the user. Unlike conventional techniques, a system operating in accordance with the techniques of the disclosure operates in multiple modalities on both user inputs and outputs of LLMs, multimodal language models, or variational autoencoders with multimodal autoencoders. This allows a conversational assistant as described herein to handle multiple modalities on user's input and provide a more comprehensive and efficient user experience.

A system as described herein, in addition, may enable the real-time maintenance and updating of Knowledge Graphs. One of the key challenges in the field of AI-based conversational assistants is the maintenance and updating of KGs in real-time scenarios. The technical solution set forth herein may simplify this process by allowing the system to learn from user interactions and update the KG accordingly. The techniques disclosed herein operate in multiple modalities on both user inputs and outputs of LLM, multimodal language models, and/or variational autoencoders with multimodal autoencoders, making it highly adaptable and efficient. Moreover, each node in the user profile graph of CoT-KG is an input-output pair, which simplifies the maintenance and update of the knowledge graph. This is a significant improvement over conventional techniques, where KGs are often difficult to maintain and update, especially in real-time scenarios.

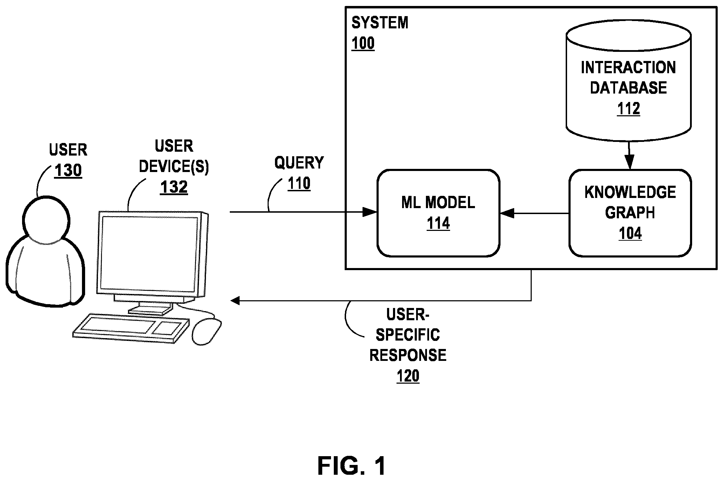

FIG. 1 is a block diagram illustrating an example system 100 for executing a conversational assistant in accordance with the techniques of the disclosure. System 100 includes machine learning model 114, KG 104, and user interaction history database 112. The conversational assistant of system 100 employs machine learning model 114 for formulating a response to query 110 received from user 130 via user device 132. In accordance with the techniques of the disclosure, and as described in more detail below, herein, machine learning model 114 is informed by KG 104, which attempts to model a chain of thought of user 130 and is generated from records of past interactions between user 130 and system 100. System 100, as described in more detail below, may improve the understanding and memory of a conversational assistant using a CoT-KG.

User 130 may be, e.g., a customer of an enterprise. The enterprise may provide a conversational assistant, via system 100, with which user 130 may communicate so as to ask questions about products or services provided by the enterprise, obtain documentation, tutorials, troubleshooting assistance, customer support related to the products or services provided by the enterprise, etc. In other examples, user 130 may be an administrator or employee, who may interact with system 100 to perform troubleshooting, administration, or support related to the products or services provided by the enterprise.

User 130 submits query 110 to system 100. A query, as described herein, may also be referred to as a prompt. Query 110 may be in the form of multiple modalities or multiple different types of media. For example, query 110 may a text query transmitted to system 100 via user device 132. As another example, query 110 may a video query transmitted via a video input device or an audio query transmitted via an audio input device. In some examples, query 110 may be in the form of a facial expression or gesture conveyed by user 130 and measured by facial tracking equipment or motion tracking equipment.

Typically, system 100 receives query 110 from user via user device(s) 132. For example, user device(s) 132 may be one or more devices that provides a user interface with which user 130 may interact with system 100, such as a computing device, a desktop computer, a laptop, a mobile device, a tablet computer, a personal digital assistant (PDA), or "smart" phone, and the like. In some examples, such as where query 110 takes a modal form other than a textual query, user device(s) 132 may be or may include a video input device, an audio input device, facial tracking equipment, motion tracking equipment, gesture tracking equipment, or other suitable types of user interfaces.

System 100 may be implemented on any computer hardware having with sufficient computational power. In some examples, system 100 may be implemented within a single computing device, while in other examples, system 100 may be implemented across a distributed computing system, such as a cloud computing platform. In some examples, system 100 comprises a computation engine implemented in circuitry. For instance, a computation engine of system 100 may include, any one or more of a microprocessor, a controller, a digital signal processor (DSP), an application specific integrated circuit (ASIC), a field-programmable gate array (FPGA), or equivalent discrete or integrated logic circuitry. In another example, system 100 may comprise any suitable computing system, such as desktop computers, laptop computers, gaming consoles, personal digital assistants (PDAs), smart televisions, handheld devices, tablets, mobile telephones, "smart" phones, etc. In some examples, at least a portion of system 100 may be distributed across a cloud computing system, a data center, or across a network, such as the Internet, another public or private communications network, for instance, broadband, cellular, Wi-Fi, and/or other types of communication networks, for transmitting data between computing systems, servers, and computing devices.

In some examples, system 100 may be implemented in circuitry, such as via one or more processors and/or one or more storage devices (not depicted in FIG. 1). One or more of the devices, modules, storage areas, or other components of system 100 may be interconnected to enable inter-component communications (physically, communicatively, and/or operatively). In some examples, such connectivity may be provided by through system bus, a network connection, an inter-process communication data structure, or any other method for communicating data. The one or more processors of system 100 may implement functionality and/or execute instructions associated with system 100. Examples of processors include microprocessors, application processors, display controllers, auxiliary processors, one or more sensor hubs, and any other hardware configured to function as a processor, a processing unit, or a processing device. System 100 may use one or more processors to perform operations in accordance with one or more aspects of the present disclosure using software, hardware, firmware, or a mixture of hardware, software, and firmware residing in and/or executing at system 100.

One or more storage devices within system 100 (not depicted in FIG. 1) may store information for processing during operation of system 100. In some examples, one or more storage devices are temporary memories, meaning that a primary purpose of the one or more storage devices is not long-term storage. Storage devices on system 100 may be configured for short-term storage of information as volatile memory and therefore not retain stored contents if deactivated. Examples of volatile memories include random access memories (RAM), dynamic random access memories (DRAM), static random access memories (SRAM), and other forms of volatile memories known in the art. Storage devices, in some examples, also include one or more computer-readable storage media. Storage devices may be configured to store larger amounts of information than volatile memory. Storage devices may further be configured for long-term storage of information as non-volatile memory space and retain information after activate/off cycles. Examples of non-volatile memories include magnetic hard disks, optical discs, floppy disks, Flash memories, or forms of electrically programmable memories (EPROM) or electrically erasable and programmable (EEPROM) memories. Storage devices may store program instructions and/or data associated with one or more of the modules described in accordance with one or more aspects of this disclosure.

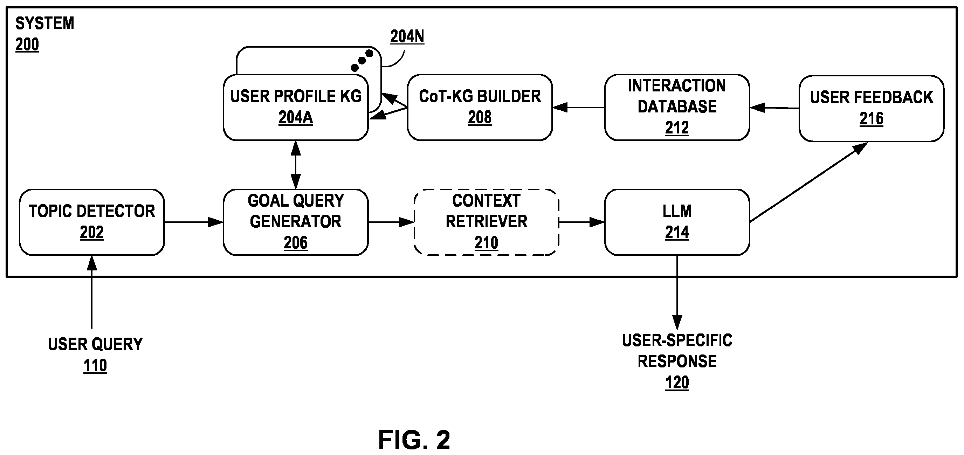

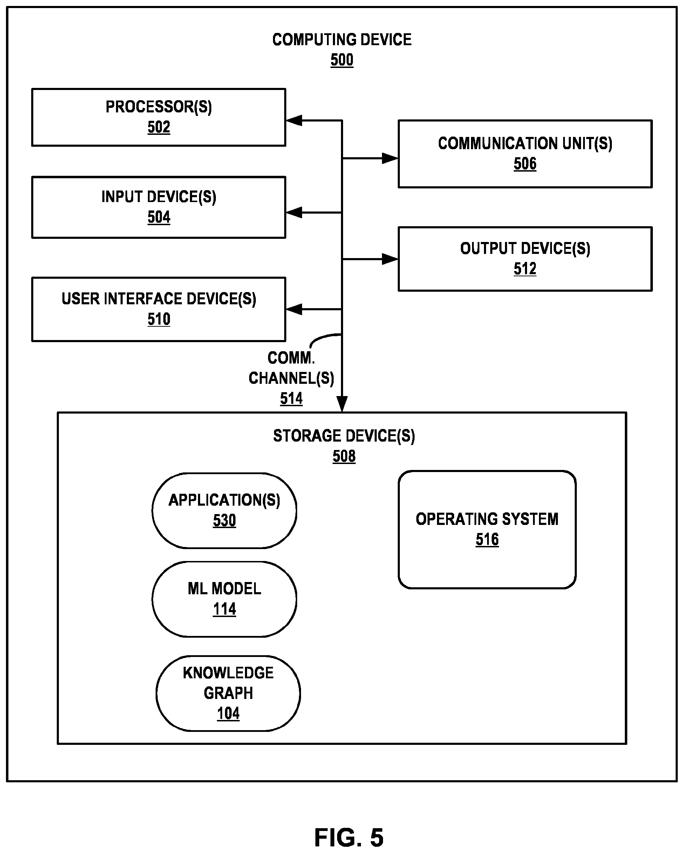

The one or more processors and one or more storage devices of system 100 may provide an operating environment or platform for one or more modules, which may be implemented as software, but may in some examples include any combination of hardware, firmware, and software. The one or more processors may execute instructions and the one or more storage devices may store instructions and/or data of one or more modules. The combination of processors and storage devices may retrieve, store, and/or execute the instructions and/or data of one or more applications, modules, or software. The processors and/or storage devices may also be operably coupled to one or more other software and/or hardware components, including, but not limited to, one or more of the components illustrated in FIGS. 2 and 5 below.

User interaction history database 112 is a database that includes, for numerous different users including user 130, records of past interactions between each corresponding user and system 100. For example, database 112 includes records of past queries by user 130 and past responses by system 100 to the past queries of user 130. As discussed above, these queries may be multimodal in that the queries may include natural gestures, expressions, sentiment, tone of voice, typed feedback, indications of likes or dislikes, or comments provided by user 130 to system 100. For example, multimodal, as described herein, refers to content of multiple types of modalities, such as image, text, audio, and/or video-based content, for example, in addition to other types of content not expressly described herein. In some examples, database 112 includes historical searches conducted by user 130, such as via a search engine or web browser. In some examples, database 112 includes one or more topics of interest of the user. In some examples, database 112 includes a profile for user 130, which may include, e.g., a country of residence or employment, a type of employment or department within which user 130 works, a job code of user 130, or a geographic location of user 130. In some examples, database 112 includes a voice modulation and/or an avatar selected by user 130 for use by the conversational assistant provided by system 100.

KG 104, in accordance with the techniques of the disclosure, is a KG that models a chain of thought of user 130. A KG is a knowledge base that structures data in the form of a directed graph comprising nodes and edges between the nodes. The nodes of a KG may be used to represent topics, while the edges may be used to represent relationships between the topics represented by the corresponding nodes. Conventionally, a KG may be used to model the chain of thought of a machine learning model, so as to increase the likelihood of coherent responses and decrease the occurrence of hallucinations. A conventional KG may achieve this by constraining the machine learning model to generate responses that follow a chain of thought as modeled by a KG, with the intent that a progression of topics within an exchange between a user and a conversational assistant should follow a logical flow wherein each subsequent topic is related to each preceding topic, and non sequitur topics by the conversational assistant should be minimized.

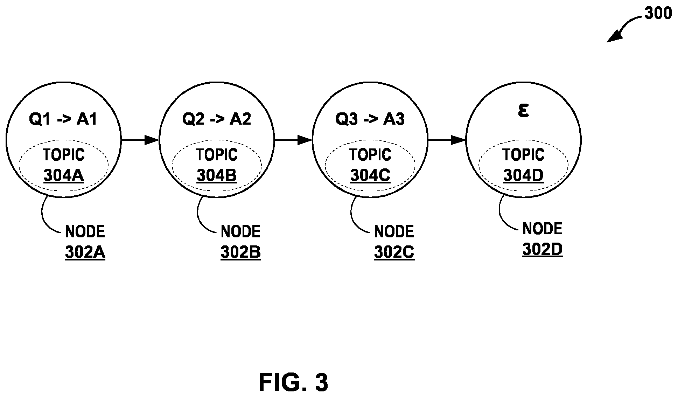

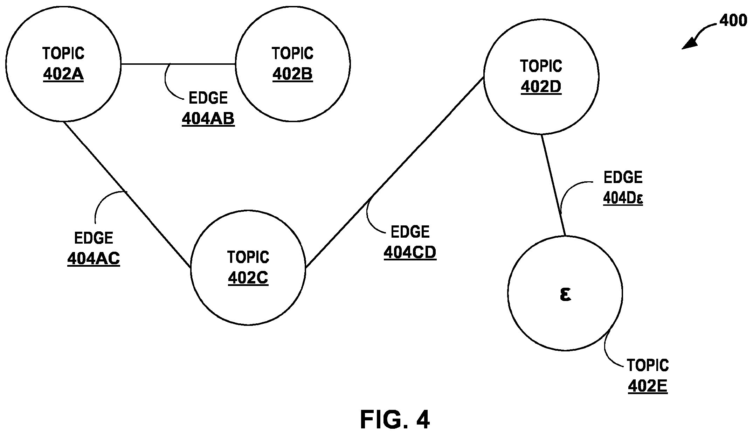

In accordance with the techniques of the disclosure, KG 104 comprises a CoT-KG corresponding to user 130 and models a chain of thought of user 130. This is in contrast to a conventional KG that may be used to model a chain of thought of a machine learning model. By modeling the chain of thought of user 130, machine learning model 114 may predict a next topic to be queried by user 130, such as an ultimate goal topic of user 130, follow-up queries that user 130 is predicted to ask, or additional topics in which user 130 is predicted to be interested. This may enable system 100 to provide tailored, user-specific responses to queries by user 130. A contextual topic CoT-KG 104, as described herein, may be developed using a large corpus of text data. The corpus includes a diverse range of topics and genres to ensure the CoT-KG is comprehensive. As described in more detail with respect to FIGS. 3 and 4 below, system 100 generates a corresponding KG 104 for each specific user from records of past interactions between each corresponding user and system 100 stored by user interaction history database 112.

In some examples, system 100 implements a mechanism for real-time updating of KG 104. This involves continuously monitoring interactions between user 130 and the conversational assistant provided by system 100 and updating KG 104 based on new information. The updating process is performed in a way that preserves the integrity of the graph structure of KG 104 and does not lead to overfitting.

For example, system 100 may update KG 104 based at least in part on user feedback received for response 120. System 100 receives a second query from user 130 via user device 132. System 100 determines, based at least in part on a second topic present within the second query and the updated KG 104 corresponding to user 130, a second goal query that comprises a second goal topic. System 100 provides, to ML model 114, the second query to generate, by ML model 114, a second response to the second query by user 130, wherein the second goal topic constrains ML 114 to include the second goal topic of the second goal query within the second response. System 100 outputs the second response to the second query by user 130. In this fashion, system 100 may provide a response that is based at least in part on KG 104 corresponding to user 130 and updated based at least in part on feedback to response 120 received from user 130.

System 100 includes machine learning model 114. In some examples, machine learning model 114 is an artificial neural network. For example, machine learning model 114 may be an LLM. In other examples, machine learning model 114 may be a multimodal language model. In other examples, machine learning model 114 may be a variational autoencoder with multimodal autoencoders. In still other examples, machine learning model 114 may implement another type of architecture, such as a deep learning model or a Transformer-based architecture.

In some examples, machine learning model 114 is an application or service operated by a third-party. Machine learning model 114 may be executed using public, private, or hybrid cloud infrastructure separate from other components of system 100. Other components of system 100 may communicate with such a machine learning model 114 via a network.

In some examples, machine learning model 112 is a LLM. An LLM is a computational model that may achieve general-purpose language generation and other natural language processing tasks such as classification. Based on language models, LLMs learn statistical relationships from vast amounts of text during a computationally intensive, self-supervised, and semi-supervised training process. An LLM is a form of generative AI that may be used for text generation by taking an input text and repeatedly predicting a next token or word. An LLM may be an artificial neural network that uses the transformer architecture. A transformer is a deep learning architecture based on the multi-head attention mechanism. A transformer converts text into numerical representations called tokens. Each token is converted into a vector via a look-up from a word embedding table. At each layer, each token is then contextualized within the scope of a context window with other, unmasked, tokens via a parallel multi-head attention mechanism that amplifies the signal for key tokens, while diminishing the signal for less important tokens.

In some examples, machine learning model 112 is a multimodal language model. In further examples, machine learning model 112 is a variational autoencoder with multimodal autoencoders. A variational autoencoder is an artificial neural network architecture that employs variational Bayesian methods by connecting a neural encoder network to its decoder through a probabilistic latent space corresponding to the parameters of a variational distribution. Therefore, the encoder maps each point of a large, complex dataset into a distribution within the latent space, rather than to a single point in that space. The decoder operates in the opposite fashion, mapping the latent space to the input space according to a distribution. This may enable a variational autoencoder to avoid or mitigate the problem of overfitting training data. A multimodal language model or a variational autoencoder with multimodal autoencoders may enable machine learning model 112 to support, as inputs, multimodal data, such as content of multiple types of modalities, such as image, text, audio, and/or video-based content, for example, in addition to other types of content not expressly described herein.

Machine learning model 114 is trained to receive, as inputs, query 110 from user 130 and a KG 104 specific to user 130, and generate, as an output, user-specific response 120 to query 110. A response by machine learning model 114, as described herein, may also be referred to as an "answer." Response 120 is typically in the form of text, such as a text string. However, in some examples, response 120 may be in the form of multiple different types of modalities, such as images for display to user 130, such as text, pictograms, or symbols; audio, such as generated speech; video, such as an avatar and corresponding movements, gestures, or appearances of the avatar; or a combination of the above. In some examples, user-specific response 120 may include a selection of a voice modulation and/or an avatar for use by the conversational assistant provided by system 100 for subsequent communication with user 130.

In some examples, system 100 processes training data to train machine leaning model 114 to generate a response to a query. In some examples, the training data may include one or more sets of queries and corresponding responses and/or one or more corresponding CoT-KGs generated from the sets of queries and corresponding responses. System 100 may train machine leaning model 114 with the training data to perform a variety of tasks, including question answering, text generation, and dialogue management. In some examples, the training process is iterative, with machine learning model 114 being fine-tuned on the one or more CoT-KGs at each step. For example, machine leaning model 114 may convert the training data into vectors and tensors (e.g., multi-dimensional arrays) upon which machine learning model 114 may apply mathematical operations, such as linear algebraic, nonlinear, or alternative computation operations. In some examples, a big data framework is implemented so as to allow for the use of a large amount of available data as training data.

In some examples, system 100 uses training data to teach machine learning model 112 to weigh different features present within a query. For example, system 100 may use training data to teach machine learning model 112 to apply different coefficients that represent features present within a query as having more or less importance with respect to constructing an appropriate response to the query. The amount of training data required to train model 112 may depend on the type of queries to which machine learning model 112 is intended to respond, the complexity of the queries, and the variety and/or quality of the queries and answers used as training data. In some examples, the training data may include at least several hundred, thousand, or millions of examples to train an effective machine learning model to operate as a conversational assistant. In some examples, system 100 uses the training data to optimize machine learning model 112 and increase the accuracy of results produced by machine learning model 112.

In one example, system 100 may additionally comprise test data (not depicted). The performance of the conversational assistant implemented by system 100, as well as the performance of machine learning model 114, may be tested. This may involve evaluating the ability of the conversational assistant to understand and remember a context of a conversation with a particular user, such as user 130, as well as its ability to predict a next question or topic that user 130 is likely to ask. The testing process typically is rigorous and involves a diverse range of users and scenarios. For example, the test data includes a number of queries. System 100 may apply trained machine learning model 112 to the test data to evaluate the accuracy of responses produced by machine learning model 112 or an error rate of machine learning model 112. In some examples, system 100 applies trained machine learning model 112 to the test data to validate that trained machine learning model 112 accurately generates a response that is coherent and relevant to the corresponding query. In some examples, system 100 applies trained machine learning model 112 to test data to validate that trained machine learning model 112 performs accurately above a threshold percentage (e.g., 50%, 75%, 90%, 95%, 99%).

In accordance with the techniques of the disclosure, a conversational assistant system, such as system 100, processes, for each user of a plurality of different users, records of past queries by the user and corresponding past responses by machine learning model 114 stored by interaction database 112 to generate a different KG corresponding to each user of the plurality of users. For example, system 100 processes records of past queries by user 130 and corresponding past responses by machine learning model 114 stored by interaction database 112 to generate KG 104 corresponding to user 130. KG 104 comprises nodes and edges, each of the nodes representing a topic present within the past queries by user 130, and each of the edges representing a co-occurrence between the topics present within the past queries by user 130.

System 100 receives, from user 130 via user device 132, query 110. System 100 determines, from query 110, one or more topics present within query 110. System 100 determines, based at least in part on each topic present within query 110 and KG 104 corresponding to user 130, a goal query. The goal query comprises a goal topic that is predicted to be an end goal of query 110 from user 130, to which user 130 is predicted to attempt to reach over the course of several query-and-response interactions with system 100. For example, the goal query may represent a penultimate question by the user, with the goal topic representing a response or answer from machine learning model 114, whereafter user 130 may conclude the interaction with the conversational assistant provided by system 100.

System 100 provides, to machine learning model 114, query 130 to generate, by machine learning model 114, user-specific response 120. System 100 constrains machine learning model 114 to include the goal topic of the goal query within response 120. System 100 outputs, for display, response 120 to query 110 by user 130. Because, as described herein, each KG 104 is particular to a corresponding user and models the corresponding user's chain of thought, machine learning model 114 may generate responses 120 that are particular to each user 130, and may be different for different users. System 100 outputs, for display, response 120 to query 110 by user 130. Therefore, system 100, as described herein, may use a KG 104 generated for a specific user to assist machine learning model 114 in generating a response 120 that may be more likely to address a goal query or goal topic of user 130, thereby enabling a conversational assistant implemented by system 100 to produce contextual, precise responses that are likely to be more helpful in resolving the query of user 130 than conventional systems.

The techniques of the disclosure may provide benefits to a wide range of applications in fields such as data center customer service, virtual assistants, and educational systems. In customer service, the techniques of the disclosure may significantly enhance the efficiency and effectiveness of customer support. By understanding how a user thinks and predicting their future questions, a chatbot as described herein may provide more accurate and timely responses, thereby improving customer satisfaction. This may be particularly useful in industries where customers have complex or technical questions, such as telecommunications, financial services, and healthcare. In virtual assistants, the techniques of the disclosure can provide a more personalized and intuitive user experience. By modeling a user's thought process, a virtual assistant as described herein may anticipate a user's needs and provide proactive suggestions or recommendations. This may greatly improve the convenience and usability of virtual assistants, making them more appealing to a wider range of users. In educational systems, the techniques of the disclosure may be used to develop more intelligent and adaptive learning systems. By understanding how a student thinks and predicting their future questions, the system can provide more targeted and effective teaching strategies. This may greatly improve the learning outcomes of students, making education more accessible and efficient. A system operating in accordance with the techniques of the disclosure may enable the implementation of AI chatbots that are more intelligent and responsive that conventional techniques. For example, a system operating in accordance with the techniques of the disclosure may enable the use of a chatbot or virtual assistant that is suitable for use by businesses and individuals that rely on digital platforms for customer service and virtual assistance. Furthermore, with the advent of 5G and other emerging technologies, a system operating in accordance with the techniques of the disclosure may enable the implementation of AI chatbots that are more smart and adaptive than conventional learning systems.

FIG. 2 is a block diagram illustrating example system 200 for executing a conversational assistant in accordance with the techniques of the disclosure. In some examples, system 200 is an implementation of system 100 of FIG. 1. System 200 includes topic detector 202, user profile CoT-KGs 204A-204N (collectively, "CoT-KGs 204"), CoT-KG builder 208, user interaction history database 212, goal query generator 206, optional context retriever 210, and LLM 214. Each of components 202, 206, 204, 208, 210, 212, and 214 may be implemented in circuitry, such as via one or more processors and/or one or more storage devices (not depicted in FIG. 2). As described herein, system 200 executes a conversational assistant that receives user query 110 from a user, such as user 130 of FIG. 1, and generates, based on a COT-KG 204A corresponding to the user, user-specific response 120 that is responsive to the query.

User interaction history database 212 is a database that includes, for numerous different users, historic conversation data between the corresponding user and LLM 214. User interaction history database 212. For example, database 212 includes records of past queries by user 130 and past responses by LLM 214 to the past queries of user 130. As discussed above, these queries may be multimodal in that the queries may include natural gestures, expressions, sentiment, tone of voice, typed feedback, indications of likes or dislikes, or comments provided by user 130 to system 200. In some examples, the past queries by the user comprise multimodal queries including two or more of text queries, audio queries, or video queries. In some examples, database 112 includes historical searches conducted by user 130, such as via a search engine or web browser. In some examples, database 112 includes one or more topics of interest of the user. In some examples, database 112 includes a profile for user 130, which may include, e.g., a country of residence or employment, a type of employment or department within which user 130 works, a job code of user 130, or a geographic location of user 130. In some examples, database 112 includes a voice modulation and/or an avatar selected by user 130 for use by the conversational assistant provided by system 100.

CoT-KG builder 208 constructs, for each user of a plurality of users, a CoT-KG 204 that models a chain of thought of the corresponding user by mining past conversational data between the user and LLM 214 stored in interaction database 212. Typically, CoT-KG builder 208 constructs a different CoT-KG 204 for each different user. CoT-KG builder 208 may obtain information from a variety of sources to generate the CoT-KG 204 for the user, such as the records of past queries by the user, a profile of the user, and one or more topics of interest associated with the user. For example, CoT-KG builder 208 processes records, stored in interaction database 212, of past queries by a user and past responses by LLM 214 to the past queries of the user to construct a CoT-KG 204 specific to the user.

In some examples, the historical conversation data may include, e.g., conversation data for queries of multiple modalities or multiple types of media types e.g., responses, and user feedback on the responses, such as natural gestures, facial or body expressions, conveyed sentiment, tone of voice of the user, textual or typed feedback, an indication of a "like" or "dislike," or other types of comments. In some examples, this historical conversation data is processed to predict whether the user is enjoying the conversation (or has enjoyed a previous conversation or topic). System 200 may store this prediction for use in the future for incorporation into the generation of the CoT-KG 204 for the user. Thus, system 200, operating in accordance with the techniques of the disclosure, may significantly enhance the user experience and time taken to answer a goal query of user 130, that may otherwise not be directly identifiable from an initial query of the user.

In some examples, CoT-KG builder 208 further mines user feedback from the user's past interaction history to construct the CoT-KG 204 for the user. As another example, CoT-KG builder 208 may further base the construction of the CoT-KG 204 for the user on a profile for user 130 stored by user interaction history database 212, which may include, e.g., a country of residence or employment, a type of employment or department within which user 130 works, a job code of user 130, or a geographic location of user 130. As another example, CoT-KG builder 208 may further base the construction of the CoT-KG 204 for the user on a voice modulation and/or an avatar selected by user 130 for use by the conversational assistant provided by system 100. As another example, CoT-KG builder 208 may further base the construction of the CoT-KG 204 for the user on historical searches conducted by user 130, such as via a search engine or web browser.

In some examples, to generate CoT-KG 204 for the user, CoT-KG builder 208 obtains, from interaction database 212, records of past queries by a user and past responses by LLM 214 to the past queries of the user. CoT-KG builder 208 generates, for each pair of the past queries by the user and the corresponding past responses by LLM 214, a chain of topics identified to be present within the pair and linked in sequential order. For each topic of the chain of topics for each pair, CoT-KG builder 208 generates a node representing the topic within a CoT-KG 204 for the user. Further, for each two sequential topics of the chain of topics for each pair, CoT-KG builder 208 generates an edge between two corresponding nodes of the CoT-KG 204 for the user.

Each of user profile KGs (e.g., CoT-KGs) 204 is a user-specific weighted, undirected knowledge graph. Each node of a CoT-KG 204 is a topic discussed or queried by the corresponding user in the past. In addition, each edge of the CoT-KG 204 represents a co-occurrence of two topics in past conversations between the user and LLM 214, the two topics corresponding to two nodes connected by the edge. In some examples, a weight of an edge denotes a probability of a co-occurrence, within a single query of the past queries by the user, of the two corresponding topics represented by two nodes of the nodes joined by the edge.

Topic detector 202 processes user query 110 to identify one or more underlying intents or topics present within user query 110. In some examples, user query 110 comprises a text string, and topic detector 202 processes the text string to identify one or more identified topics present within the text string. In some examples, user query 110 comprises audio, such as spoken language, and topic detector 202 processes the audio to identify one or more identified topics present within the audio. In some examples, user query 110 comprises video, such as video data of a facial expression or gesture performed by user 130. In this example, topic detector 202 processes the video data to identify one or more identified topics present within the video. In some examples, topic detector 202 may perform semantic understanding of the user query 110 to identify the one or more underlying topics present within user query 110.

Goal query generator 206 receives the one or more identified topics from topic detector 202. Goal query generator 206 leverages CoT-KG 204A corresponding to user 130 to predict, based at least in part on the one or more identified topics, one or more subsequent or follow-up queries user 130 may provide. Goal query generator 206 further generates an overarching goal query that encapsulates one or more related goal topics to be included in response 120 generated by LLM 214.

Context retriever 210 is an optional component. In some examples, context retriever 210 is a knowledge base query engine. Querying a knowledge base (such as CoT-KG 204) may require domain-specific knowledge related to the storage system. For example, context retriever 210 may be included where the conversational assistant implemented by system 200 performs retrieval augmented generation (RAG). RAG is the process of optimizing an output of LLM 214 so as to reference an authoritative knowledge base outside of its training data sources, prior to generating a response. Typically, LLM 214 is trained on a vast volume of data and may use billions of parameters to generate response 120 for tasks like answering questions, translating languages, and completing sentences. By implementing RAG, context retriever 210 may extend LLM 214 to specific domains or to an organization's internal knowledge base, without the need to retrain LLM 214. The use of context retriever 210 may be a cost-effective approach to improving response 120 of LLM 214 output to be more relevant, accurate, and useful in various contexts. The use of context retriever 210 to interface with an external knowledge base may be particularly useful where the conversational assistant implemented by system 200 operates as a technical support or quality assurance agent for resolving technical difficulties of user 130 with respect to a technical or complicated product. In some examples, context retriever 210 may enable the querying of an external knowledge base using natural language.

LLM 214 is an artificial neural network that is trained, as described herein, to receive, as an input, user query 110 and generate, as an output, user-specific response 120. As described herein, LLM 214 is constrained to include the one or more related goal topics of the identified goal query within user-specific response 120 by the CoT-KG 204A corresponding to user 130. In some examples, user-specific response 120 comprises a curated or preferred prompt and/or response specific to user 130. In some examples, user-specific response 120 may include a selection of a voice modulation and/or an avatar for use by the conversational assistant provided by system 100 for subsequent communication with user 130. In some examples, system 200 may output response 120 for display to user 130 via a display device (not depicted in FIG. 2).

LLM 214 is a computational model that may achieve general-purpose language generation and other natural language processing tasks such as classification. Based on language models, LLM 214 learns statistical relationships from vast amounts of text during a computationally intensive, self-supervised, and semi-supervised training process. LLM 214 is a form of generative AI that may be used for text generation by taking an input text and repeatedly predicting a next token or word. In some examples, LLM 214 is an artificial neural network that uses the transformer architecture. A transformer is a deep learning architecture based on the multi-head attention mechanism. A transformer converts text into numerical representations called tokens. Each token is converted into a vector via a look-up from a word embedding table. At each layer, each token is then contextualized within the scope of a context window with other, unmasked, tokens via a parallel multi-head attention mechanism that amplifies the signal for key tokens, while diminishing the signal for less important tokens.

User feedback 216 captures user feedback of the performance of system 200 from user 130 of FIG. 1. In some examples, user feedback 216 uses the received user feedback for a response by LLM 214 and updates the KG 204 corresponding to the user based at least in part on the user feedback. In some examples, user feedback 216 receives a user feedback score for each pair comprising a query by user 130 and a response by LLM 214, a current topic associated with the query-response pair, and a preceding topic to the current topic. As described in more detail in FIG. 4 below, CoT-KG builder 208 may use the user feedback scores to update a weight of an edge of a CoT-KG 204, the edge joining two nodes of the nodes representing the topic present within the preceding query and the topic present within the query.

In some examples, LLM 214 is an application or service operated by a third-party. LLM 214 may be executed using public, private, or hybrid cloud infrastructure separate from other components of system 200. Other components of system 200, such as 202, 206, 210, may communicate with LLM 214 via a network, such as the internet.

FIG. 3 is a block diagram illustrating example conversation chain 300 in accordance with the techniques of the disclosure. As described above, conversation chain 300 is generated from records of past queries by a user and corresponding past responses by the machine learning model. Typically, conversation chain 300 is generated from a single conversation comprising a query-response pair between the user and system 100.

As described above, CoT-KG builder 208 of FIG. 2 models each user conversation as a chain, wherein each query and response pair is modeled as a topic. Conversation chain 300 comprises a chain of nodes 302A-302D (collectively, "nodes 302"). Each node 302 represents a corresponding one of topics 304A-304D (collectively, "topics 304") present within the conversation represented by the query-response pair between the user and system 100. Furthermore, each node 302 is linked to a subsequent node 302 according to a sequential order within which the corresponding topics 304 arose within the query-response pair. In some examples, two or more topics may be combined into a single node if the two or more topics are determined to be semantically similar.

Topic 302D is referred to herein as "ε." The ε topic denotes that the conversation ended after system 100 provided a response to a latest query by the user. The purpose of including the ε topic is to indicate, to Goal Query Generator 206, that a topic 304 having the ε topic as a neighbor is likely to be a goal topic of the user. In other words, when a user receives a response that satisfies the user's ultimate query (or goal query), the user is more likely to end the conversation. As described herein, machine learning model 114 may be encourage the generation of responses that include topics 404 that are adjacent to the ε topic, so as to increase the likelihood of providing useful responses that satisfy the goal query of the user.

In accordance with the techniques of the disclosure, CoT-KG builder 208 builds conversation chain 300 from historic conversations comprising pairs of past queries by user 130 and corresponding past responses by machine learning model 114. To build conversation chains that may be used to construct a knowledge graph, CoT-KG builder 208 iterates through each historical conversation in user interaction history database 212. For each conversation, CoT-KG builder 208 generates a conversation chain by identifying a topic for every query and response pair. In some examples, CoT-KG builder 208 links topic to one another based on a sequential order in which the topics arose during the interactions between user 130 and system 100.

FIG. 4 is a block diagram illustrating example CoT-KG 400 in accordance with the techniques of the disclosure. As described above, CoT-KG 400 is generated from one or more conversation chains generated from records of past queries by a user and corresponding past responses by the machine learning model. CoT-KG 400 may be an example of a CoT-KG generated from, e.g., one or more conversation chains including conversation chain 300 of FIG. 3. Typically, CoT-KG 400 is specific to each user and is generated on a per-user basis.

CoT-KG 400 includes a plurality of nodes 402A-402E (collectively, "nodes 402"). Each node 402 represents a topic present within past queries by a user. CoT-KG 400 further includes a plurality of edges 404AB, 404AC, 404CD, and 404Dε (collectively, "edges 404") interconnecting nodes 402. Each edge 404 represents a probability of a co-occurrence between two topics present within the past queries by the user (and, in some examples, a probability of this co-occurrence being accepted by user 130). Each edge 404 is further associated with a weight that represents a probability of a co-occurrence, within a single past query of the user, of two topics represented by two nodes of the nodes joined by the edge. In some examples, the weight represents a probability that a first topic is followed by a second topic in a previous conversation comprising a query-response pair between the user and system 100.

In accordance with the techniques of the disclosure, CoT-KG builder 208 builds CoT-KG 400 to model a user's chain of thought from historic conversations. As described above with respect to FIG. 4, CoT-KG builder 208 generates multiple conversation chains, including, e.g., conversation chain 300, from historic conversations comprising pairs of past queries by user 130 and corresponding past responses by machine learning model 114.

For each topic within each conversation chain, CoT-KG builder 208 creates a corresponding node 402 in CoT-KG 400 corresponding to the topic (unless a corresponding node in CoT-KG 400 already exists). For each edge between two topics of each conversation chain, CoT-KG builder 208 creates a corresponding edge 404 between nodes 402 of CoT-KG 400 corresponding to the two topics (unless a corresponding edge 404 in CoT-KG 400 already exists).

Further, CoT-KG builder 208 updates a weight of the edges 404 between each node 402. In some examples, the weight is calculated by counting a number of times two topics have been followed by each other in the historic conversations of user 130. CoT-KG builder 208 then obtains a weighted average of the count and a historic user feedback score received for this co-occurrence.

As described above, system 100 of FIG. 1 may update a weight of one or more edges 404 based at least in part on feedback received from a user. In some examples, the user feedback comprises a score for a pair comprising the query by the user and the response by system 100, an indication of a topic present within a preceding query by the user, and an indication of the topic present within the query. System 100 may update, based at least in part on the score, a weight of an edge of edges 404, the edge joining two nodes that represent the topic present within the preceding query and the topic present within the query.

An example algorithm for updating a weight of an edge of a CoT-KG as described herein is set forth below:

$$ w_{jk} = \varphi * \sum_{c=1}^{n} \frac{O_c(T_j, Tk)}{O_c(T_j, Tj)} + \phi * F(T_i, Tj) $$

In the foregoing algorithm, $\sum_{c=1}^{n} \frac{O_c(T_j, Tk)}{O_c(T_j, Tj)}$ describes a chain length of the conversation chain and optimizes for the chain length of the conversation chain. This portion of the algorithm denotes the probability of topics $Tj$ and $Tk$ occurring one after another within historic conversations of a user with system 100. With respect to the foregoing example, topic $Tj$ refers to a topic present within a preceding query by a user, and topic $Tk$ represents the topic present within the current query by the user.

$\varphi$ is a value within the interval [0,1] and denotes an amount of weightage to be assigned to the chain length.

$O_c$ is a function which outputs 1 if, in a conversation c, topic $Tj$ is followed by topic $Tk$, or vice versa. The output is also 1 if $j = k$. In all other scenarios, the output is

0.

$\phi * F(T_i, Tj)$ describes a chain quality of the conversation chain and optimizes for the quality and/or user feedback score of the conversation chain. This portion of the algorithm denotes a mean feedback score given by a user to query-response pairs wherein topic $Tj$ is followed by topic $Tk$, or vice versa in historic conversations.

$\phi$ is a value within the interval [0,1] and denotes an amount of weightage to be assigned to the chain quality.

$F$ is a function that provides an output in the interval [0,1]. The output denotes a mean user feedback score given to query-response pairs wherein topic $Tj$ is followed by topic $Tk$, or vice versa in historic conversations.

FIG. 5 is a block diagram illustrating an example computing device 500 for executing a conversational assistant in accordance with the techniques of the disclosure. FIG. 5 may illustrate a particular example of a server or other computing device 500 that includes one or more processor(s) 502 for executing any one or more of applications 530, machine learning model 114, and knowledge graph 104 of FIG. 1 as described herein. Other examples of computing device 500 may be used in other instances. Although shown in FIG. 5 as a stand-alone computing device 500 for purposes of example, a computing device may be any component or system that includes one or more processors or other suitable computing environment for executing software instructions and, for example, need not necessarily include one or more elements shown in FIG. 5 (e.g., communication units 506; and in some examples components such as storage device(s) 508 may not be co-located or in the same chassis as other components). Computing device 500 may be located and execute, for example, within any device 24, 26 of network infrastructure 20 or co-location facility 10, another interconnection facility, or at a branch office or cloud computing environment employed or used by a cloud exchange provider. Multiple computing devices 500 may execute corresponding instances of applications 530, machine learning model 114, and knowledge graph 104 in a distributed manner. In some cases, each of the multiple computing devices 500 may execute different combinations of applications 530, machine learning model 114, and knowledge graph 104. In other words, a single computing device 500 may not execute each of applications 530, machine learning model 114, and knowledge graph 104.

As shown in the specific example of FIG. 5, computing device 500 includes one or more processors 502, one or more input devices 504, one or more communication units 506, one or more output devices 512, one or more storage devices 508, and user interface (UI) device 510, and communication unit(s) 506. Computing device 500, in one example, further includes one or more applications 530, machine learning model 114, and knowledge graph 104 that are executable by computing device 500. Each of components 502, 504, 506, 508, 510, and 512 are coupled (physically, communicatively, and/or operatively) for inter-component communications. In some examples, communication channels 514 may include a system bus, a network connection, an inter-process communication data structure, or any other method for communicating data. As one example, components 502, 504, 506, 508, 510, and 512 may be coupled by one or more communication channels 514.

Processors 502, in one example, are configured to implement functionality and/or process instructions for execution within computing device 500. For example, processors 502 may be capable of processing instructions stored in storage device 508. Examples of processors 502 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 508 may be configured to store information within computing device 500 during operation. Storage device 508, in some examples, is described as a computer-readable storage medium. In some examples, storage device 508 is a temporary memory, meaning that a primary purpose of storage device 508 is not long-term storage. Storage device 508, in some examples, is described as a volatile memory, meaning that storage device 508 does not maintain stored contents when the computer is turned off. Examples of volatile memories include random access memories (RAM), dynamic random access memories (DRAM), static random access memories (SRAM), and other forms of volatile memories known in the art. In some examples, storage device 508 is used to store program instructions for execution by processors 502. Storage device 508, in one example, is used by software or applications running on computing device 500 to temporarily store information during program execution.

Storage devices 508, in some examples, also include one or more computer-readable storage media. Storage devices 508 may be configured to store larger amounts of information than volatile memory. Storage devices 508 may further be configured for long-term storage of information. In some examples, storage devices 508 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 500, in some examples, also includes one or more communication units 506. Computing device 500, in one example, utilizes communication units 506 to communicate with external devices via one or more networks, such as one or more wired/wireless/mobile networks. Communication units 506 may include a network interface card, such as an Ethernet card, an optical transceiver, a radio frequency transceiver, or any other type of device that can send and receive information. Other examples of such network interfaces may include 3G and WiFi radios. In some examples, computing device 500 uses communication unit(s) 506 to communicate with an external device.

Computing device 500, in one example, also includes one or more user interface devices 510. User interface devices 510, in some examples, are configured to receive input from a user through tactile, audio, or video feedback. Examples of user interface devices(s) 510 include a presence-sensitive display, a mouse, a keyboard, a voice responsive system, video camera, microphone or any other type of device for detecting a command from a user. In some examples, a presence-sensitive display includes a touch-sensitive screen.

One or more output devices 512 may also be included in computing device 500. Output device 512, in some examples, is configured to provide output to a user using tactile, audio, or video stimuli. Output device 512, in one example, includes a presence-sensitive display, a sound card, a video graphics adapter card, or any other type of device for converting a signal into an appropriate form understandable to humans or machines. Additional examples of output device 512 include a speaker, a cathode ray tube (CRT) monitor, a liquid crystal display (LCD), or any other type of device that can generate intelligible output to a user.

Computing device 500 may include operating system 516. Operating system 516, in some examples, controls the operation of components of computing device 500. For example, operating system 516, in one example, facilitates the communication of one or more applications 530 and interconnection platform application(s) 530 with processors 502, communication unit(s) 506, storage device 508, input device 504, user interface devices 510, and output device 512.

Applications 530, machine learning model 114, and knowledge graph 104 may also include program instructions and/or data that are executable by computing device 500. Example applications 530 executable by computing device 500 may include a web browser and/or dashboard interface.

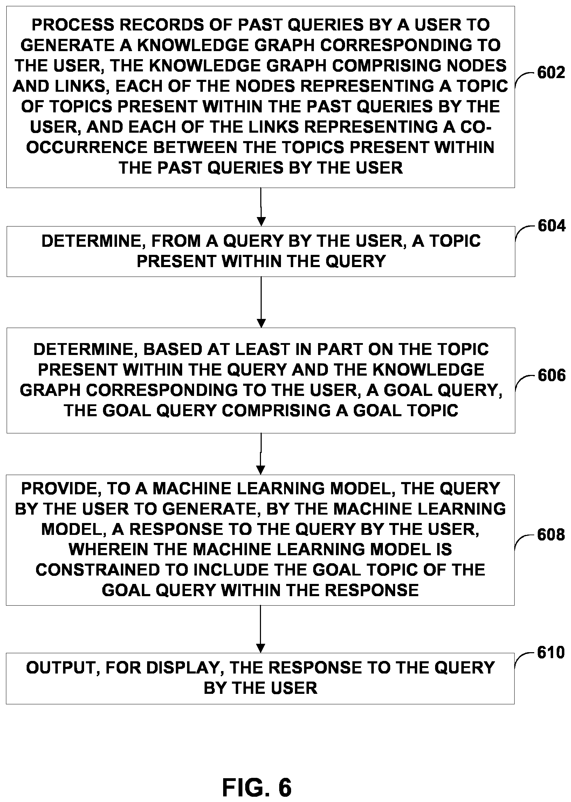

FIG. 6 is a flow chart illustrating example operation 600 in accordance with the techniques of the disclosure. For convenience, operation 600 is described with respect to system of FIG. 1. However, operation 600 may be performed by system 200 of FIG. 2 or computing device 500 of FIG. 5.

In accordance with the techniques of the disclosure, a conversational assistant system, such as system 100, processes, for each user of a plurality of different users, records of past queries by each user and corresponding past responses by machine learning model 114 stored by interaction database 112 to generate a KG corresponding to each user (602). For example, system 100 processes records of past queries by user 130 and corresponding past responses by machine learning model 114 stored by interaction database 112 to generate KG 104 corresponding to user 130. KG 104 comprises a plurality of nodes and a plurality of links. Each of the nodes represents a topic present within the past queries by user 130. Each of the links represents a co-occurrence between the topics present within the past queries by user 130. In some examples, KG 104 comprises a CoT-KG corresponding to user 130 and modeling a chain of thought of user 130.

System 100 receives, from user 130 via user device 132, query 110. System 100 determines, from query 110, one or more topics present within query 110 (604). System 100 determines, based at least in part on each topic present within query 110 and KG 104 corresponding to user 130, a goal query (606). The goal query comprises a goal topic. The goal topic is predicted to be an end goal of query 110 from user 130, to which user 130 is predicted to attempt to reach over the course of several query-and-response interactions with system 100. For example, the goal query may represent a penultimate question by the user, with the goal topic representing a response or answer from machine learning model 114, whereafter user 130 may conclude the interaction with the conversational assistant provided by system 100.

System 100 provides, to machine learning model 114, query 130 to generate, by machine learning model 114, response 120 (608). System 100 constrains machine learning model 114 to include the goal topic of the goal query within response 120. Because, as described herein, each KG 104 is particular to a corresponding user and models the corresponding user's chain of thought, machine learning model 114 may generate responses 120 that are particular to each user 130, and may be different for different users. System 100 outputs, for display, response 120 to query 110 by user 130 (610).

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media.

Various aspects and embodiments of the present disclosure may be further understood with reference to the following numbered clauses:

1. A system comprising:

processing circuitry in communication with storage media, the processing circuitry configured to:

process records of past queries by a user to generate a knowledge graph corresponding to the user, the knowledge graph comprising nodes and edges, each of the nodes representing a topic of topics present within the past queries by the user, and each of the edges representing a co-occurrence between the topics present within the past queries by the user; determine, from a query by the user, a topic present within the query; determine, based at least in part on the topic present within the query and the knowledge graph corresponding to the user, a goal query, the goal query comprising a goal topic; provide, to a machine learning model, the query by the user to generate, by the machine learning model, a response to the query by the user, wherein the goal topic constrains the machine learning model to include the goal topic of the goal query within the response; and output the response to the query by the user.

2. The system of clause 1, wherein the processing circuitry is configured to process, for each user of a plurality of different users, records of past queries by each user of the plurality of users to generate a different knowledge graph corresponding to each user of the plurality of users.

3. The system of clause 1 or 2, wherein the knowledge graph comprises a chain-of-thought knowledge graph (CoT-KG) corresponding to the user, the CoT-KG modeling a chain of thought of the user.

4. The system of any one of clauses 1 to 3, wherein each of the edges of the knowledge graph comprises a weight that represents a probability of a co-occurrence, within a single query of the past queries by the user, of two topics represented by two nodes of the nodes joined by the edge.

5. The system of any one of clauses 1 to 4, wherein, to generate the knowledge graph corresponding to the user, the processing circuitry is further configured to process records of past queries by the user and corresponding past responses by the machine learning model.

6. The system of clause 5, wherein, to generate the knowledge graph corresponding to the user, the processing circuitry is further configured to:

for each pair of the past queries by the user and the corresponding past responses by the machine learning model, generate a chain of topics identified to be present within the pair and linked in sequential order; for each topic of the chain of topics for each pair, generate a node representing the topic within the knowledge graph; and for each two sequential topics of the chain of topics for each pair, generate an edge between two corresponding nodes of the knowledge graph.

7. The system of any one of clauses 1 to 6, wherein, to generate the knowledge graph corresponding to the user, the processing circuitry is further configured to process the records of past queries by the user, a profile of the user, and one or more topics of interest associated with the user.

8. The system of any one of clauses 1 to 7, wherein the past queries by the user comprise multimodal queries including two or more of text queries, audio queries, or video queries.

9. The system of any one of clauses 1 to 8, wherein the machine learning model comprises a large language model (LLM).

10. The system of any one of clauses 1 to 9, wherein the processing circuitry is further configured to:

receive user feedback for the response; update the knowledge graph based at least in part on the user feedback; determine, from a second query by the user, a second topic present within the second query; determine, based at least in part on the second topic present within the second query and the updated knowledge graph corresponding to the user, a second goal query, the second goal query comprising a second goal topic;

provide, to the machine learning model, the second query by the user to generate, by the machine learning model, a second response to the second query by the user, wherein the second goal topic constrains the machine learning model to include the second goal topic of the second goal query within the second response; and

output the second response to the second query by the user.

11. The system of clause 10,

wherein the user feedback comprises a score for the query and the response, an indication of a topic present within a preceding query by the user, and an indication of the topic present within the query, and

wherein to update the knowledge graph, the processing circuitry is configured to update, based at least in part on the score, a weight of an edge of the edges, the edge joining two nodes of the nodes representing the topic present within the preceding query and the topic present within the query.

12. A method comprising:

processing, by processing circuitry, records of past queries by a user to generate a knowledge graph corresponding to the user, the knowledge graph comprising nodes and edges, each of the nodes representing a topic of topics present within the past queries by the user, and each of the edges representing a co-occurrence between the topics present within the past queries by the user;

determining, by the processing circuitry, from a query by the user, a topic present within the query;

determining, by the processing circuitry and based at least in part on the topic present within the query and the knowledge graph corresponding to the user, a goal query, the goal query comprising a goal topic;

providing, by the processing circuitry and to a machine learning model, the query by the user to generate, by the machine learning model, a response to the query by the user, wherein the goal topic constrains the machine learning model to include the goal topic of the goal query within the response; and

outputting, by the processing circuitry, the response to the query by the user.

13. The method of clause 12, wherein further comprising processing, by the processing circuitry and for each user of a plurality of different users, records of past queries by each user of the plurality of users to generate a different knowledge graph corresponding to each user of the plurality of users.

14. The method of clause 12 or 13, wherein each of the edges of the knowledge graph comprises a weight that represents a probability of a co-occurrence, within a single query of the past queries by the user, of two topics represented by two nodes of the nodes joined by the edge.

15. The method of any one of clauses 12 to 14, wherein generating the knowledge graph corresponding to the user comprises processing records of past queries by the user and corresponding past responses by the machine learning model.

16. The method of clause 15, wherein generating the knowledge graph corresponding to the user comprises:

for each pair of the past queries by the user and the corresponding past responses by the machine learning model, generating a chain of topics identified to be present within the pair and linked in sequential order;

for each topic of the chain of topics for each pair, generating a node representing the topic within the knowledge graph; and

for each two sequential topics of the chain of topics for each pair, generating an edge between two corresponding nodes of the knowledge graph.

17. The method of any one of clauses 12 to 16, wherein generating the knowledge graph corresponding to the user comprises processing the records of past queries by the user, a profile of the user, and one or more topics of interest associated with the user.

18. The method of any one of clauses 12 to 17, wherein the past queries by the user comprise multimodal queries including two or more of text queries, audio queries, or video queries.

19. The method of any one of clauses 12 to 18, further comprising:

receiving, by the processing circuitry, user feedback for the response, wherein the user feedback comprises a score for the query and the response, an indication of a topic present within a preceding query by the user, and an indication of the topic present within the query;

updating, by the processing circuitry and based at least in part on the score, a weight of an edge of the edges of the knowledge graph, the edge joining two nodes of the nodes representing the topic present within the preceding query and the topic present within the query

determining, by the processing circuitry and from a second query by the user, a second topic present within the second query;

determining, by the processing circuitry and based at least in part on the second topic present within the second query and the updated knowledge graph corresponding to the user, a second goal query, the second goal query comprising a second goal topic;

providing, by the processing circuitry and to the machine learning model, the second query by the user to generate, by the machine learning model, a second response to the second query by the user, wherein the second goal topic constrains the machine learning model to include the second goal topic of the second goal query within the second response; and

outputting, by the processing circuitry, the second response to the second query by the user.

20. Non-transitory, computer-readable media comprising instructions that, when executed, are configured to cause processing circuitry to:

process records of past queries by a user to generate a knowledge graph corresponding to the user, the knowledge graph comprising nodes and edges, each of the nodes representing a topic of topics present within the past queries by the user, and each of the edges representing a co-occurrence between the topics present within the past queries by the user;

determine, from a query by the user, a topic present within the query;

determine, based at least in part on the topic present within the query and the knowledge graph corresponding to the user, a goal query, the goal query comprising a goal topic;

providing, to a machine learning model, the query by the user to generate, by the machine learning model, a response to the query by the user, wherein the goal topic constrains the machine learning model to include the goal topic of the goal query within the response; and

output the response to the query by the user.

**Claims**

1. A system comprising:
   processing circuitry in communication with storage media, the processing circuitry configured to:

   process records of past queries by a user to generate a knowledge graph corresponding to the user, the knowledge graph comprising nodes and edges, each of the nodes representing a topic of topics present within the past queries by the user, and each of the edges representing a co-occurrence between the topics present within the past queries by the user;

determine, from a query by the user, a topic present within the query;

determine, based at least in part on the topic present within the query and the knowledge graph corresponding to the user, a goal query, the goal query comprising a goal topic;

provide, to a machine learning model, the query by the user to generate, by the machine learning model, a response to the query by the user, wherein the goal topic constrains the machine learning model to include the goal topic of the goal query within the response; and

output the response to the query by the user.

2. The system of claim 1, wherein the processing circuitry is configured to process, for each user of a plurality of different users, records of past queries by each user of the plurality of users to generate a different knowledge graph corresponding to each user of the plurality of users.

3. The system of claim 1 or 2, wherein the knowledge graph comprises a chain-of-thought knowledge graph, CoT-KG, corresponding to the user, the CoT-KG modeling a chain of thought of the user.

4. The system of any one of claims 1 to 3, wherein each of the edges of the knowledge graph comprises a weight that represents a probability of a co-occurrence, within a single query of the past queries by the user, of two topics represented by two nodes of the nodes joined by the edge.

5. The system of any one of claims 1 to 4, wherein, to generate the knowledge graph corresponding to the user, the processing circuitry is further configured to process records of past queries by the user and corresponding past responses by the machine learning model.

6. The system of claim 5, wherein, to generate the knowledge graph corresponding to the user, the processing circuitry is further configured to:

   for each pair of the past queries by the user and the corresponding past responses by the machine learning model, generate a chain of topics identified to be present within the pair and linked in sequential order;

   for each topic of the chain of topics for each pair, generate a node representing the topic within the knowledge graph; and

   for each two sequential topics of the chain of topics for each pair, generate an edge between two corresponding nodes of the knowledge graph.

**7.** The system of any one of claims 1 to 6, wherein, to generate the knowledge graph corresponding to the user, the processing circuitry is further configured to process the records of past queries by the user, a profile of the user, and one or more topics of interest associated with the user.

**8.** The system of any one of claims 1 to 7, wherein the past queries by the user comprise multimodal queries including two or more of text queries, audio queries, or video queries.

**9.** The system of any one of claims 1 to 8, wherein the machine learning model comprises a large language model, LLM.

**10.** The system of any one of claims 1 to 9, wherein the processing circuitry is further configured to:

receive user feedback for the response;
update the knowledge graph based at least in part on the user feedback;
determine, from a second query by the user, a second topic present within the second query;
determine, based at least in part on the second topic present within the second query and the updated knowledge graph corresponding to the user, a second goal query, the second goal query comprising a second goal topic;
provide, to the machine learning model, the second query by the user to generate, by the machine learning model, a second response to the second query by the user, wherein the second goal topic constrains the machine learning model to include the second goal topic of the second goal query within the second response; and
output the second response to the second query by the user.

**11.** The system of claim 10,

wherein the user feedback comprises a score for the query and the response, an indication of a topic present within a preceding query by the user, and an indication of the topic present within the query, and
wherein to update the knowledge graph, the processing circuitry is configured to update, based at least in part on the score, a weight of an edge of the edges, the edge joining two nodes of the nodes representing the topic present within the preceding query and the topic present within the query.

**12.** A method comprising:

processing, by processing circuitry, records of past queries by a user to generate a knowledge graph corresponding to the user, the knowledge graph comprising nodes and edges, each of the nodes representing a topic of topics present within the past queries by the user, and each of the edges representing a co-occurrence between the topics present within the past queries by the user;
determining, by the processing circuitry, from a query by the user, a topic present within the query;
determining, by the processing circuitry and based at least in part on the topic present within the query and the knowledge graph corresponding to the user, a goal query, the goal query comprising a goal topic;
providing, by the processing circuitry and to a machine learning model, the query by the user to generate, by the machine learning model, a response to the query by the user, wherein the goal topic constrains the machine learning model to include the goal topic of the goal query within the response; and
outputting, by the processing circuitry, the response to the query by the user.

**13.** The method of claim 12, further comprising steps corresponding to the functionality recited in any one of claims 2 to 11.

**14.** Computer-readable storage media comprising instructions that, when executed by one or more programmable processors, cause the one or more programmable processors to become configured to carry out the method of any of claims 12 to 13.

**FIG. 1**

EP 4 700 603 A1

SYSTEM
200

204N

USER PROFILE KG
204A

CoT-KG BUILDER
208

INTERACTION
DATABASE
212

USER FEEDBACK
216

TOPIC DETECTOR
202

GOAL QUERY
GENERATOR
206

CONTEXT
RETRIEVER
210

LLM
214

USER QUERY
110

USER-SPECIFIC
RESPONSE
120

**FIG. 2**

300

Q1 -> A1

TOPIC
304A

Q2 -> A2

TOPIC
304B

Q3 -> A3

TOPIC
304C

ε

TOPIC
304D

NODE
302A

NODE
302B

NODE
302C

NODE
302D

**FIG. 3**

400

TOPIC
402B

EDGE
404AB

TOPIC
402A

EDGE
404AC

TOPIC
402C

EDGE
404CD

TOPIC
402D

EDGE
404DE

TOPIC
402E

E

FIG. 4

COMPUTING DEVICE
500

PROCESSOR(S)
502

INPUT DEVICE(S)
504

USER INTERFACE DEVICE(S)
510

COMMUNICATION UNIT(S)
506

OUTPUT DEVICE(S)
512

COMM.
CHANNEL(S)
514

STORAGE DEVICE(S)
508

APPLICATION(S)
530

ML MODEL
114

KNOWLEDGE
GRAPH
104

OPERATING SYSTEM
516

FIG. 5

PROCESS RECORDS OF PAST QUERIES BY A USER TO GENERATE A KNOWLEDGE GRAPH CORRESPONDING TO THE USER, THE KNOWLEDGE GRAPH COMPRISING NODES AND LINKS, EACH OF THE NODES REPRESENTING A TOPIC OF TOPICS PRESENT WITHIN THE PAST QUERIES BY THE USER, AND EACH OF THE LINKS REPRESENTING A CO-OCCURRENCE BETWEEN THE TOPICS PRESENT WITHIN THE PAST QUERIES BY THE USER ⎯ 602

DETERMINE, FROM A QUERY BY THE USER, A TOPIC PRESENT WITHIN THE QUERY ⎯ 604

DETERMINE, BASED AT LEAST IN PART ON THE TOPIC PRESENT WITHIN THE QUERY AND THE KNOWLEDGE GRAPH CORRESPONDING TO THE USER, A GOAL QUERY, THE GOAL QUERY COMPRISING A GOAL TOPIC ⎯ 606

PROVIDE, TO A MACHINE LEARNING MODEL, THE QUERY BY THE USER TO GENERATE, BY THE MACHINE LEARNING MODEL, A RESPONSE TO THE QUERY BY THE USER, WHEREIN THE MACHINE LEARNING MODEL IS CONSTRAINED TO INCLUDE THE GOAL TOPIC OF THE GOAL QUERY WITHIN THE RESPONSE ⎯ 608

OUTPUT, FOR DISPLAY, THE RESPONSE TO THE QUERY BY THE USER ⎯ 610

FIG. 6

Europäisches
Patentamt

European
Patent Office

Office européen
des brevets

# EUROPEAN SEARCH REPORT

**Application Number**

EP 25 19 4636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/350929 A1 (HASAN ASIF ET AL) 2 November 2023 (2023-11-02) * paragraph [0107] - paragraph [0153]; figures 5, 6 * | 1-14 | INV. G06F16/3329 G06F16/334 G06F40/30 G06N5/022 G06N20/00 |
| A | US 11 442 992 B1 (MOON SEUNGWHAN [US] ET AL) 13 September 2022 (2022-09-13) * figure 7 * | 1-14 | |
| A | US 2020/081939 A1 (SUBRAMANIAM SENTHIL KUMAR [US]) 12 March 2020 (2020-03-12) * paragraph [0007] - paragraph [0021]; figure 4 * | 1-14 | |

**TECHNICAL FIELDS SEARCHED (IPC)**

G06F
G06N

The present search report has been drawn up for all claims

| Place of search | Date of completion of the search | Examiner |
|---|---|---|
| Munich | 11 December 2025 | Yotova, Polina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 700 603 A1**

## ANNEX TO THE EUROPEAN SEARCH REPORT
## ON EUROPEAN PATENT APPLICATION NO.

EP 25 19 4636

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2025

| Patent document cited in search report | Publication date | Patent family member(s) | Publication date |
|---|---|---|---|
| US 2023350929 A1 | 02-11-2023 | NONE | |
| US 11442992 B1 | 13-09-2022 | NONE | |
| US 2020081939 A1 | 12-03-2020 | NONE | |

EPO FORM P0459

For more details about this annex : see Official Journal of the European Patent Office, No. 12/82

25